# EUROPEAN PATENT APPLICATION

(11) **EP 2 062 727 A1**
(43) Date of publication of application: **27.05.2009**
(21) Application number: 08382066.2
(22) Date of filing: 19.11.2008
(51) Int. Cl.: B32B 37/02

(54) **Method for engraving boards and board obtained by said method**

(30) Priority: 20.11.2007 ES 200703053
(71) Applicant: Industrias Losan, S.A., 15008 La Coruña (ES)
(72) Inventor: Lopez Calvino, Manuel, 15008 La Coruna (ES)
(74) Representative: Urizar Anasagasti, Jesus Maria

(57) **Abstract**

The invention relates to a method for engraving boards (2) with any ornamental motif or texture, according to which the manufacture is carried out in a pressing production line, in which the plate of the press (1) has an engraving in negative of the motif or the texture which is to be obtained in the board (2), to which a combination of pressure, temperature and time is applied depending on the material and type of board (2) to be engraved.

## Description

### Object of the Invention

The present invention relates to a method for manufacturing engraved boards, the surface of which has a special rough texture or imitates natural wood. If this singular texture can have different shapes and depths, in any case it gives the surface of the board greater naturalness and a novel aesthetic not currently existing in the furniture market.

### Background of the Invention

Many types of boards are currently used in the furniture industry:
a) Uncoated hardboards, which are wood particle boards bonded by means of glues.
b) Uncoated MDF (Medium Density Fibreboard), or wood fibre boards bonded by means of glues.
c) Uncoated plywood; this is a board made up of thin and cross-linked layers of wood (birch, black poplar, eucalyptus etc.), bonded by means of glues.
d) Batten boards, or boards formed by battens or solid wood boards, bonded to each other by adhesives.
e) Veneered boards, which are hardboards, MDF, plywood or batten boards, coated on both surfaces with natural wood veneer, dyed or prefabricated.
f) PVC board: Hardboards, MDF, plywood or batten boards, coated on both surfaces with PVC, ABS or vinyl plastic sheets having different colours, woods and coarse sands.
g) HPL/CPL board: Hardboards, MDF, plywood or batten boards coated on both surfaces with sheets of HPL (high pressure laminates) or CPL (continuous pressure laminates) having different colours, woods and surface materials.

The manufacture of veneered boards is carried out in a pressing line subjecting the central core and the outer boards to a certain pressure and temperature, after impregnating the surface of at least one of the elements in contact with urea glues or glues of similar products. For its part, the process of manufacturing a board coated with melamine requires applying a paper impregnated with this product, with a considerably higher pressure and at a higher temperature, but for less time, for which reason the production process is faster when melamine boards are manufactured than when plywood boards are manufactured.

The only known processes of manufacturing boards with an outer engraving are of a manual nature, based on brushing or grating, by means of a brush or a sandblast before finishing the board, applying a layer of melamine, or by any other conventional process.

### Description of the Invention

The method of the present invention refers to manufacturing engraved panels, veneered or not, by means of a production line typical of melamine boards.

With respect to veneered boards, with a wood veneer, PVC, ABS, vinyl plastic sheets, or sheets of high or medium pressure laminates, the veneer/sheet is bonded to the support by means of a sheet of paper impregnated with urea glues, melamine glues, or a natural wood veneer, interposed between both elements, before subjecting them to the pressing process. In this case, the paper and the uniform distribution of the intermediate adhesive facilitates the activation of the reagent implicit therein and prevents the outer veneer from cracking or deteriorating by the effect of the pressure or temperature applied, adopting the roughness or the engraving of the plate of the press.

Nevertheless, with respect to manufacturing batten boards or materials without an outer veneer adhered to the central core of hardboard or of an equivalent material, it is necessary to precisely control the combination of pressure, temperature and time to be applied, which logically will depend on the material and type of board to be engraved.

In any of the cases, the combination of pressure, temperature and time is a determining factor since it refers to manufacturing engraved boards, veneered or not, with a melamine board production line. For that purpose, the pressure applied is comprised between 2 and 300 kg/cm², the temperature which is administered to the surfaces of the board is comprised between 10 and 400°C, and the pressing time between 10 and 120 seconds.

The method of the present invention is applied to any of the previously mentioned types of boards. With this method boards are obtained which, on at least one of their faces, have a texture which can be partial, limited to one area of the board, or on its entire surface. This texture consists of a determined embossment with different figures and depths, depending on the type of board. Figures made on the surface can make up many irregular lines (of different widths and outlines); they can be lines with the shapes of the grain of the wood, and/or lines shaping different figures, letters or drawings. The engraving can be applied longitudinally and/or transversely, with homogenous and/or irregular depths.

This method allows achieving a veneered panel which, as well as being manufactured more quickly due to the process of gluing and therefore manufacturing the product, upon achieving a better distribution and impregnation of the melamine in the inner core, allows achieving a board with improved water-repellent conditions. When unveneered batten boards are manufactured using this method, unlike other manual processes, by brushing or by means of sand abrasion, a better performance is achieved since the pressing line used is much quicker than any manual process.

### Description of the Drawings

To complement the description being made and for the purpose of helping to understand the features of the invention, a set of drawings is attached to the present specification in which the following has been shown with an illustrative and non-limiting character:
Figure 1 schematically shows a veneered board before being subjected to the bonding process for bonding its elements in the press prepared for the purpose.
Figure 2 shows a batten board or any other type of unveneered board upon being subjected to the engraving process in the same press.
Figure 3 depicts respective plan and section views of a panel manufactured with this method.

### Preferred Embodiment of the Invention

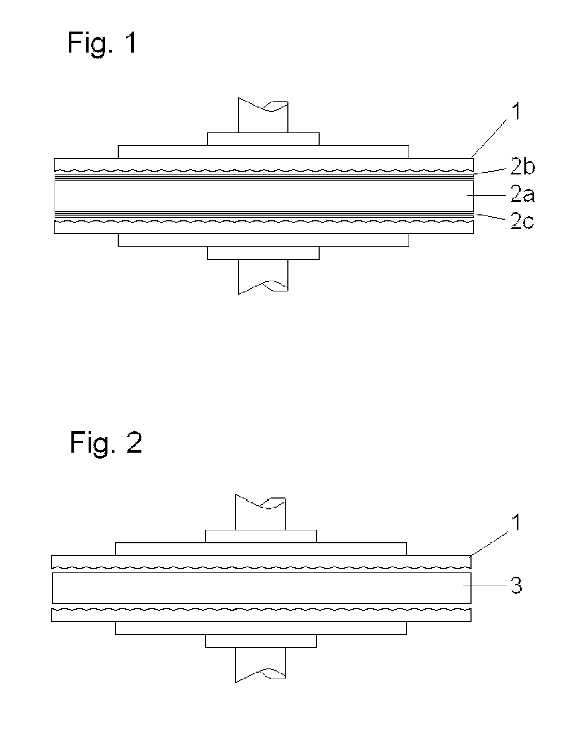

Figures 1 and 2 show a press (1) which is provided on the active face of at least one of its plates, or on both, depending on whether a board is to be engraved on both faces or on only one, with an engraving in negative of the motif or texture which is to be obtained in the board (2-3) to be manufactured. This press, which is the same as that used in manufacturing a melamine board, allows applying pressure between 2 and 300 kg/cm² on the surface of the board, which is the manufacturing range which this method requires. The plates of this type of press can be heated in the temperature range necessary for carrying out this method, which is from 10°C to 400°C. The pressing time is controlled automatically, since this method requires only between 10 and 120 seconds of panel pressing to achieve the desired engraving.

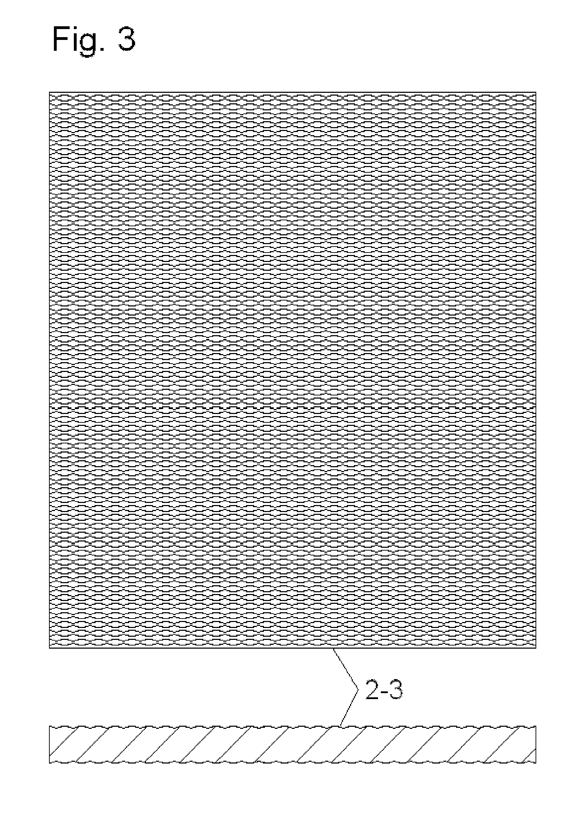

Figure 1 shows a board (2) which can be: a veneered board with respective wood sheets (2b), a board coated with PVC, ABS or vinyl plastics, or a board coated with sheets of HPL (High Pressure Laminates) or CPL (Continuous Pressure Laminates), all of them having different colours, woods and surface materials. According to the method which is described, it is necessary to place a sheet of paper impregnated with urea or melamine glues (2c), or a natural wood veneer or sheet, which is located between each veneer (2b) and the hardboard of the core (2a); since heat and pressure are applied to this sheet its glues are reactivated and adheres the outer veneer (2b), at the same time as it is engraved, externally acquiring the negative shape that the plate of the press (see Figure 3) has.

Figure 2 shows a board (3) which can be: an uncoated hardboard, an uncoated MDF (Medium Density Fibreboard) board, an uncoated plywood board, or a batten board. In these types of boards the press (1) is applied directly on them, with the temperature and time pre-calculated depending on the type of board and on the engraving which is to be obtained.

Figure 3 shows a board of any of the types mentioned above which, on at least one of its faces, has an engraving or a texture corresponding with the negative of the plate/plates of the press (1). This engraving can be partial, limited to one area of the board, or on its entire surface. This engraving consists of a certain embossment with different figures and depths; in the figure there are many different lines, but logically irregular lines and different widths and layouts can also be made.

Having sufficiently described the nature of the invention as well as a preferred embodiment, it is hereby stated for all relevant purposes that the materials, shape, size and arrangement of the elements described can be modified, as long as it does not involve altering the essential features of the invention which are claimed below.

## Claims

1. A method for engraving boards with any ornamental motif or texture, **characterized in that** according to the method, the manufacturing is carried out in a pressing production line, in which the plate of the press has an engraving in negative of the motif or the texture which is to be obtained in the board, to which a combination of pressure, temperature and time is applied depending on the material and type of board to be engraved, the applied pressure being comprised between 2 and 300 kg/cm², the temperature which is administered to the surfaces of the board is comprised between 10 and 400°C, and the time pressed between 10 and 120 seconds.

2. The method for engraving boards according to the previous claim, **characterized in that** with respect to veneered boards with a wood veneer, PVC, ABS, vinyl plastic sheets, or sheets of high or medium pressure laminates, the bonding of the veneer/sheet to the support is carried out by means of a panel sheet impregnated with urea or melamine glues, or a natural wood veneer, interposed between both elements before the pressing process.

3. An engraved board obtained by the method of the previous claims, whether it is a hardboard, made of uncoated wood particles, fibres or veneers, by batten or wood boards bonded by means of glues, or a veneered board with a wood veneer, PVC, ABS or vinyl plastic sheets, or sheets of high medium pressure laminates, which is **characterized in that** in at least one area of the surface of one the faces of the panel, or in its entire surface, it has an engraving consisting of an embossment with an ornamental motif, or with a rough texture or imitates natural wood, with different depths, determined by the negative of the plate of the press with which it is manufactured.
